# EUROPÄISCHE PATENTANMELDUNG

(11) **EP 4 145 006 A1**
(43) Veröffentlichungstag der Anmeldung: **08.03.2023**
(21) Anmeldenummer: 22194071.1
(22) Anmeldetag: 06.09.2022
(51) Int. Cl.: F16B 47/00

(54) **VORRICHTUNG UND VERWENDUNG ZUM BEFESTIGEN EINER SANITÄRKOMPONENTE AN EINER WAND**

(30) Priorität: 06.09.2021 DE 102021122981
(71) Anmelder: Grohe AG, 58675 Hemer (DE)
(72) Erfinder: KALKA, Franziska, 59494 Soest (DE); HEITKAMP, Hendrik, 44287 Dortmund (DE); RÜTZLER, Anja, 58708 Menden (DE)

(57) **Zusammenfassung**

Vorrichtung (1) zum Befestigen einer Sanitärkomponente an einem Träger, zumindest aufweisend:
- eine Befestigungsplatte (2) mit einer Klebefläche (3) zur Befestigung der Vorrichtung (1) an dem Träger; und
- ein Metallgitter (4), das zumindest teilweise die Klebefläche (3) bildet.

Weiter wird auch eine Verwendung einer solchen Vorrichtung angegeben.

## Beschreibung

Die vorliegende Erfindung betrifft eine Vorrichtung und Verwendung zum Befestigen einer Sanitärkomponente an einem Träger, wie zum Beispiel einer Wand. Mit solchen Vorrichtungen können insbesondere Sanitärkomponenten, wie zum Beispiel Brausestange, Handtuchhalter, Ablagen und/oder Seifenspender, an Wänden von Sanitärräumen befestigt werden.

Bekannte Vorrichtungen zum Befestigen von Sanitärkomponenten werden regelmäßig mit Schrauben an einer Wand befestigt. Problematisch ist häufig, dass Wände in Sanitärräumen mit Fliesen verkleidet sind, die durch die Verschraubung beschädigt werden können. Weiterhin ist die Befestigung von Befestigungsvorrichtungen mit Klebestreifen oder Kleber bekannt, wodurch eine Beschädigung der Fliesen vermieden werden kann. Nachteilig hieran ist jedoch, dass die Verklebung häufig nicht die erforderliche Haltbarkeit erreicht.

Aufgabe der Erfindung ist daher, die mit Bezug auf den Stand der Technik geschilderten Probleme zumindest teilweise zu lösen und insbesondere eine Vorrichtung zum Befestigen einer Sanitärkomponente an einer Wand anzugeben, durch die eine hohe Haltbarkeit erreichbar ist.

Diese Aufgabe wird gelöst mit einer Vorrichtung gemäß den Merkmalen des unabhängigen Patentanspruchs. Weitere vorteilhafte Ausgestaltungen der Vorrichtung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Hierzu trägt eine Vorrichtung zum Befestigen einer Sanitärkomponente an einem Träger bei, die zumindest Folgendes aufweist:
- eine Befestigungsplatte mit einer Klebefläche zur Befestigung der Vorrichtung an dem Träger; und
- ein Metallgitter, das zumindest teilweise die Klebefläche bildet.

Die Vorrichtung dient insbesondere der Befestigung einer Sanitärkomponente an einem Träger, wie zum Beispiel einer Wand, einer Decke und/oder einer dort anzubringenden Halterung. Bei einer solchen Sanitärkomponente kann es sich beispielsweise um eine Brausestange, Handtuchhalter, Seifenspender, Ablage, Papierhalter, Toilettenbürstengarnitur, etc. handeln. Bei der Vorrichtung kann es sich um ein separates Bauteil bzw. eine Bauteilgruppe handeln, an dem die Sanitärkomponente befestigbar ist. Weiterhin kann die Vorrichtung aber auch einstückig mit der Sanitärkomponente ausgebildet sein.

Die Vorrichtung weist eine Befestigungsplatte auf, die beispielsweise nach Art einer Befestigungskonsole ausgebildet sein kann. Weiterhin kann die Befestigungsplatte, insbesondere orthogonal zu einer Zentrumsachse oder Längsachse der Befestigungsplatte, einen (etwa) runden Querschnitt aufweisen. Zudem kann die Befestigungsplatte, insbesondere orthogonal zu der Zentrumsachse oder Längsachse, einen Durchmesser von beispielsweise 10 mm bis 100 mm und/oder, insbesondere parallel zu der Zentrumsachse oder Längsachse, eine Dicke von 2 mm bis 30 mm aufweisen.

Die Befestigungsplatte weist eine Klebefläche zur Befestigung der Vorrichtung an der Wand auf. Bei der Klebefläche handelt es sich insbesondere um eine Fläche der Befestigungsplatte, auf der zur Befestigung der Vorrichtung an dem Träger bzw. der Wand ein Klebstoff auftragbar ist. Somit kann es sich bei der Klebefläche insbesondere um eine nicht selbstklebende Fläche handeln. Bei dem Klebstoff kann es sich beispielsweise um einen Einkomponentenklebstoff, Zweikomponentenklebstoff oder Mehrkomponentenklebstoff handeln. Der Klebstoff kann insbesondere auf die Klebefläche aufgetragen werden, bevor die Befestigungsplatte an den Träger gedrückt wird. Alternativ kann der Klebstoff auch über eine Zuführöffnung in der Befestigungsplatte in einen Spalt und/oder auf die Klebefläche gespritzt werden. Die Klebefläche verläuft insbesondere orthogonal zu der Zentrumsachse oder Längsachse der Befestigungsplatte. Weiterhin kann die Klebefläche rund ausgebildet sein und/oder einen Klebeflächendurchmesser von beispielsweise 9 mm bis 99 mm [Millimeter] aufweisen. Das Applizieren des Klebstoffes erfolgt zumeist erst unmittelbar vor der Montage der Befestigungsplatte an dem Träger bzw. der Wand, gehört also regelmäßig nicht zur Vorrichtung selbst.

Die Vorrichtung umfasst zudem ein Metallgitter, das zumindest teilweise die Klebefläche bildet. Das Metallgitter kann zumindest teilweise aus Edelstahl oder einer Zinklegierung bestehen. Das Metallgitter weist besonders vorteilhafte Hafteigenschaften für den Klebstoff auf. Weiterhin kann das Metallgitter nach Art eines Drahtgewebes ausgebildet sein. Bei dem Drahtgewebe kann es sich um ein Maschengewebe und/oder ein Flächengebilde mit einer Vielzahl von Öffnungen handeln. Die Öffnungen können gleichartig ausgebildet und/oder regelmäßig angeordnet sein. Weiterhin können die Öffnungen durch ein, insbesondere rechtwinkliges, Verkreuzen von Kettdrähten und Schussdrähten des Drahtgewebes gebildet sein.

Die Befestigungsplatte kann zumindest teilweise aus Kunststoff bestehen. Es ist möglich, dass die Befestigungsplatte vollständig aus Kunststoff besteht. Weiterhin kann es sich bei der Befestigungsplatte um ein Kunststoffspritzgussteil handeln. Hierdurch ist eine hohe Gestaltungsfreiheit der Befestigungsplatte bei niedrigen Kosten erzielbar. Alternativ kann die Befestigungsplatte auch zumindest teilweise aus Metall, wie zum Beispiel Edelstahl, bestehen.

Das Metallgitter kann zumindest teilweise in die Befestigungsplatte integriert bzw. eingegossen sein. Hierzu kann das Metallgitter bei der Herstellung der Befestigungsplatte beispielsweise in ein Spritzgießwerkzeug eingelegt werden und anschließend flüssiger Kunststoff in das Spritzgießwerkzeug gespritzt werden, sodass das Metallgitter nach dem Aushärten des Kunststoffs zumindest teilweise in die Befestigungsplatte eingegossen ist.

Die Befestigungsplatte kann ein erstes Plattenteil und ein zweites Plattenteil umfassen, zwischen denen das Metallgitter zumindest teilweise angeordnet ist. Das erste Plattenteil und das zweite Plattenteil können, insbesondere in Richtung der Zentrumsachse bzw. Längsachse, nebeneinander angeordnet sein. Das Metallgitter kann zwischen dem ersten Plattenteil und dem zweiten Plattenteil zumindest teilweise eingeklemmt sein, sodass das Metallgitter, insbesondere reibschlüssig, an der Befestigungsplatte befestigt ist. Das erste Plattenteil und/oder das zweite Plattenteil können insbesondere zumindest teilweise aus Kunststoff und/oder Metall, wie zum Beispiel Edelmetall, bestehen.

Die Klebefläche kann zumindest teilweise über das Metallgitter belüftbar sein. Das Metallgitter kann hierzu zumindest einen freiliegenden Bereich aufweisen, in dem Luft von einer Frontseite der Vorrichtung durch die Öffnungen des Metallgitter zu der Klebefläche hindurchströmen kann. Zu diesem Zweck kann die Befestigungsplatte zumindest eine Belüftungsöffnung aufweisen, die sich parallel zu der Zentrumsachse oder Längsachse, insbesondere vollständig, durch die Befestigungsplatte erstreckt. Unter "freiliegend" kann insbesondere verstanden werden, dass das Metallgitter die Befestigungsplatte in dem zumindest einen freiliegenden Bereich beidseitig nicht kontaktiert bzw. nicht an der Befestigungsplatte anliegt. Der Klebstoff kann beim Applizieren in dem zumindest einen freiliegenden Bereich durch die Öffnungen des Metallgitters fließen, sodass das Metallgitter in dem zumindest einen freiliegenden Bereich in dem Klebstoff eingebettet ist. Der Klebstoff und das Metallgitter können hierbei einen Verbundwerkstoff bilden. Eine Querschnittsfläche der zumindest einen Belüftungsöffnung oder eine Summe der Querschnittsflächen aller Belüftungsöffnungen der Befestigungsplatte kann beispielsweise 100 mm² (Quadratmillimeter) bis 1.000 mm² betragen. Weiterhin kann sich die zumindest eine Belüftungsöffnung beispielsweise über eine Fläche von 20 % bis 100 % der Klebefläche erstrecken. Dies kann mit anderen Worten auch bedeuten, dass beispielsweise 30 % bis 80 % einer Gesamtfläche der Klebefläche durch den zumindest einen freiliegenden Bereich des Metallgitters gebildet ist.

Die Befestigungsplatte kann einen Aufnahmeraum für einen Klebstoff aufweisen. Der Aufnahmeraum kann beispielsweise nach Art einer Vertiefung in einer Stirnseite der Befestigungsplatte ausgebildet sein. Der Aufnahmeraum wird zumindest teilweise, ggf. sogar vollständig, durch das Metallgitter und/oder die Klebefläche begrenzt. Die Klebefläche kann zur Ausbildung des Aufnahmeraums ausgehend von der Stirnseite der Befestigungsplatte, insbesondere parallel zu der Zentrumsachse bzw. Längsachse, in einer Tiefe von 0,3 mm bis 5 mm (Millimeter) in der Befestigungsplatte ausgebildet sein. Der Aufnahmeraum kann bei der Fixierung der Vorrichtung an dem Träger insbesondere einen Spalt zwischen der Klebefläche und dem Träger ausbilden.

Die Befestigungsplatte kann zumindest eine Anlagefläche für den Träger aufweisen, mit der die Klebefläche von dem Träger beabstandbar ist. Bei der Anlagefläche handelt es sich insbesondere um eine Fläche, mit der die Befestigungsplatte nach ihrer Montage den Träger kontaktiert. Die Anlagefläche ist insbesondere derart ausgebildet, dass zwischen der Klebefläche und der Wand ein Spalt bzw. der Aufnahmeraum für den Klebstoff entsteht. Die Klebefläche kann in der Befestigungsplatte, insbesondere parallel zu der Zentrumsachse oder Längsachse der Befestigungsplatte, beispielsweise mit einem Abstand von 0,3 mm bis 5 mm (Millimeter) zu der Anlagefläche ausgebildet sein. Hierdurch kann ein Spalt mit einer Spaltbreite von 0,3 mm bis 5 mm zwischen der Klebefläche und dem Träger erzeugbar sein. Weiterhin können die Klebefläche und die Anlagefläche parallel zueinander verlaufen. Zudem kann die Anlagefläche ringförmig ausgebildet sein. Die Anlagefläche kann zumindest ein Klebemittel zur Vorfixierung der Vorrichtung an dem Träger aufweisen. Bei dem zumindest einen Klebemittel kann es sich beispielsweise um eine Klebefolie handeln, die die Befestigungsplatte an dem Träger fixiert, bevor der Klebstoff ausgehärtet ist. Weiterhin kann die Klebefolie umlaufend, ringförmig, ringsegmentförmig, rechteckförmig und/oder punktförmig ausgebildet sein.

Das Metallgitter kann eine Vielzahl von Öffnungen umfassen, die eine Breite von 0,1 mm bis 1 mm (Millimeter) aufweisen. Bei der Breite kann es sich auch um einen Durchmesser oder eine Maschenweite der Öffnungen des Metallgitters handeln.

Die Befestigungsplatte kann zumindest eine erste Befestigungseinrichtung zum Befestigen der Befestigungsplatte an dem Träger aufweisen. Die zumindest eine Befestigungseinrichtung kann beispielsweise nach Art einer Befestigungsöffnung und/oder Bohrung ausgebildet sein. Weiterhin kann sich die zumindest eine erste Befestigungseinrichtung parallel zu der Zentrumsachse oder Längsachse durch die Befestigungsplatte erstrecken. Über die zumindest eine erste Befestigungseinrichtung ist insbesondere die Befestigungsplatte, beispielsweise mithilfe einer Schraube und/oder eines Dübels, an dem Träger befestigbar. Hierdurch ist die Haltbarkeit der Befestigungsplatte an dem Träger weiter erhöhbar.

Die Befestigungsplatte kann zumindest eine zweite Befestigungseinrichtung für die Sanitärkomponente aufweisen. Die zumindest eine zweite Befestigungseinrichtung kann beispielsweise nach Art einer Bohrung, Ausnehmung, Interface, Gewinde, Bajonettverschluss, Rasthaken und/oder Rastgeometrie ausgebildet sein. Über die zumindest eine zweite Befestigungseinrichtung ist insbesondere die Sanitärkomponente an der Befestigungsplatte bzw. der Vorrichtung befestigbar.

Gemäß einem weiteren Aspekt wird die Verwendung einer hier offenbarten Vorrichtung zum sicheren und/oder einfachen Befestigen einer Sanitärkomponente an einem Träger (ohne dessen Beschädigung) mittels eines Klebstoffes vorgeschlagen. Die Erläuterungen zur Vorrichtung und deren Einsatz können auch zur Charakterisierung der Verwendung herangezogen werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: eine erste Ausführungsvariante einer Vorrichtung in einer ersten perspektivischen Darstellung; und
- Fig. 2:: die erste Ausführungsvariante der Vorrichtung in einer zweiten perspektivischen Darstellung;
- Fig. 3:: ein Metallgitter der ersten Ausführungsvariante der Vorrichtung; und
- Fig. 4:: eine zweite Ausführungsvariante der Vorrichtung.

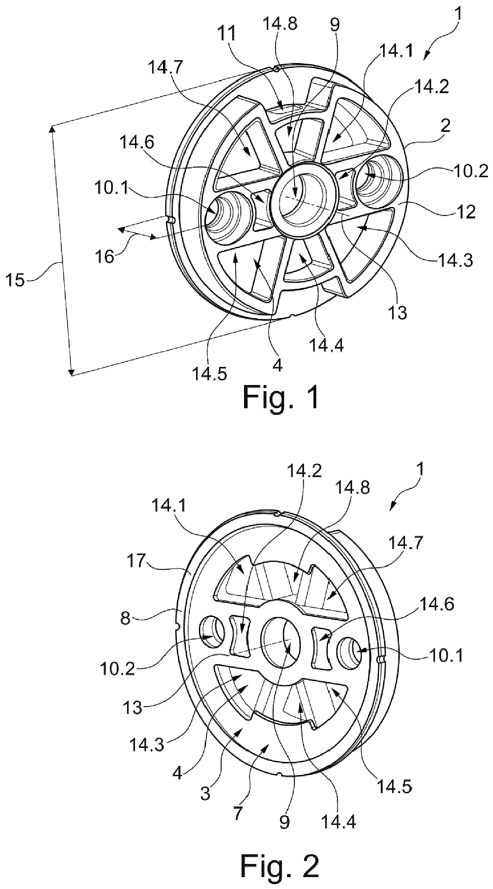

Die Fig. 1 zeigt eine erste Ausführungsvariante einer Vorrichtung 1 in einer ersten perspektivischen Darstellung mit Blick auf eine Frontseite 12. Die Vorrichtung 1 umfasst eine Befestigungsplatte 2, die nach Art einer Befestigungsscheibe ausgebildet ist. Die Befestigungsplatte 2 ist rund ausgebildet und erstreckt sich entlang einer Längsachse 13. Weiterhin ist die Befestigungsplatte 2 als einteiliges Kunststoffspritzgussteil ausgebildet. Die Vorrichtung 1 bzw. die Befestigungsplatte 2 weist (orthogonal zu der Längsachse 13) einen Durchmesser 15 und (parallel zu der Längsachse 13) eine Dicke 16 auf. Weiterhin umfasst die Vorrichtung 1 ein Metallgitter 4, das außer im Bereich von Belüftungsöffnungen 14.1, ..., 14.8 in die Befestigungsplatte 2 eingegossen ist. Das Metallgitter 4 ist nach Art eines Drahtgewebes ausgebildet und erstreckt sich in einer orthogonal zu der Längsachse 12 orientierten Ebene.

Die Fig. 2 zeigt die erste Ausführungsvariante der Vorrichtung 1 in einer zweiten perspektivischen Darstellung mit Blick auf eine Anlagefläche 8, die sich ringförmig um die Längsachse 13 der Vorrichtung 1 erstreckt. Bei einer Befestigung der Vorrichtung 1 an einem hier nicht gezeigten Träger, wird die Vorrichtung 1 mit der Anlagefläche 8 an dem Träger positioniert. Die Anlagefläche 8 ist an einer Stirnseite 17 der Vorrichtung 1 bzw. der Befestigungsplatte 2 ausgebildet und kann ein Klebemittel, beispielsweise in Form eines doppelseitigen Klebebands, zur Vorfixierung der Vorrichtung 1 an dem Träger aufweisen. Weiterhin weist die Befestigungsplatte 2 eine Klebefläche 3 auf, die teilweise durch das Metallgitter 4 gebildet ist. Die Klebefläche 3 erstreckt sich innerhalb der ringförmigen Anlagefläche 8 und (im Wesentlichen) orthogonal zu der Längsachse 13. Weiterhin ist die Klebefläche 3 innerhalb der Befestigungsplatte 2 ausgebildet, sodass die Klebefläche 3 (parallel zu der Längsachse 13) einen Abstand zu der Anlagefläche 8 aufweist. Hierdurch steht die Klebefläche 3 nicht mit dem Träger in Kontakt, wenn die Vorrichtung 1 mit der Anlagefläche 8 an dem Träger angeordnet ist. Ausgehend von der Anlagefläche 8 bzw. der Stirnseite 17 ist die Klebefläche 3 somit in einer (sich parallel zu der Längsachse 13 erstreckenden) Tiefe der Befestigungsplatte 2 ausgebildet. Die Klebefläche 3 begrenzt einen Aufnahmeraum 7 für einen hier nicht gezeigten Klebstoff, wobei sich der Aufnahmeraum 7 zylinderförmig von der Klebefläche 3 parallel zu der Längsachse 13 bis zu der Anlagefläche 8 erstreckt. Nach der Anordnung der Vorrichtung 1 mit der Anlagefläche 8 an dem Träger, kann über eine (auch in der Fig. 1 gezeigte) Zuführöffnung 9, die sich parallel und koaxial zu der Längsachse 13 erstreckt, Klebstoff in den Aufnahmeraum 7 gespritzt werden. Da die Klebefläche 3 bzw. der Aufnahmeraum 7 über die Belüftungsöffnungen 14.1, ... 14.8 belüftbar ist, kann der Klebstoff besonders schnell aushärten. Zudem kann der Klebstoff von dem Aufnahmeraum 7 durch das Metallgitter 4 in Richtung der in der Fig. 1 gezeigten Frontseite 12 hindurchströmen, sodass der Klebstoff mit dem Metallgitter 4 einen Verbundwerkstoff ausbilden kann. Darüber hinaus weist die Befestigungsplatte 2 zwei erste Befestigungseinrichtungen 10.1, 10.2 auf, die nach Art von sich parallel zu der Längsachse 13 erstreckenden Bohrungen ausgebildet sind. Durch die Befestigungseinrichtungen 10.1, 10.2 kann die Vorrichtung 1 mithilfe von Schrauben zusätzlich an dem Träger befestigt werden. Zudem weist die Befestigungsplatte 2 zwei zweite Befestigungseinrichtungen 11 auf, von denen eine in der Fig. 1 sichtbar ist. Die zwei zweiten Befestigungseinrichtungen 11 sind nach Art von Rastkonturen ausgebildet, an die eine hier nicht gezeigte Sanitärkomponente befestigbar ist.

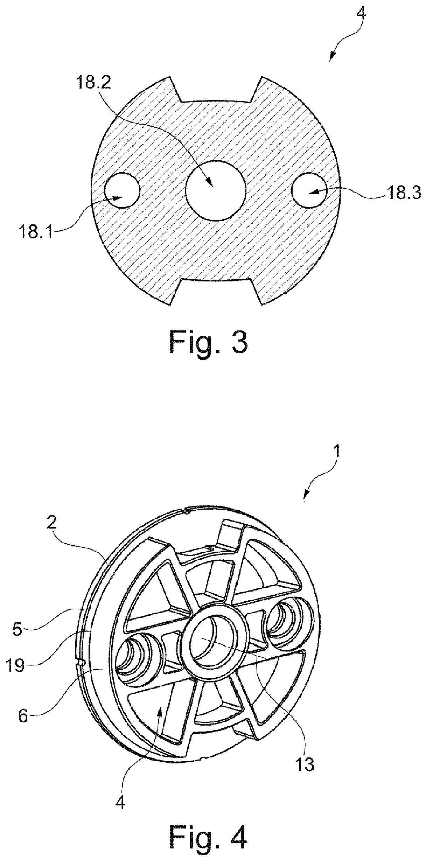

Die Fig. 3 zeigt das Metallgitter 4 der in den Fig. 1 und 2 gezeigten Vorrichtung 1 in einer Frontansicht. Das Metallgitter 4 weist Ausschnitte 18.1, 18.2, 18.3 für die in den Fig. 1 und 2 gezeigten ersten Befestigungseinrichtungen 10.1, 10.2 und die Zuführöffnung 9 auf.

Die Fig. 4 zeigt eine zweite Ausführungsvariante der Vorrichtung 1 in einer perspektivischen Darstellung. Die zweite Ausführungsvariante der Vorrichtung 1 unterscheidet sich von der in den Fig. 1 und 2 gezeigten ersten Ausführungsvariante der Vorrichtung 1 lediglich dadurch, dass die Befestigungsplatte 2 ein erstes (im Wesentlichen) rundes Plattenteil 5 und ein zweites (im Wesentlichen) rundes Plattenteil 6 aufweist. Das erste Plattenteil 5 und das zweite Plattenteil 6 sind in Richtung der Längsachse 13 nebeneinander angeordnet und kontaktieren sich in einer Kontaktebene 19. Weiterhin sind das erste Plattenteil 5 und das zweite Plattenteil 6 mit einer Schnappverbindung miteinander verbunden, sodass das Metallgitter 4 zwischen dem ersten Plattenteil 5 und dem zweiten Plattenteil 6 der Befestigungsplatte 2 eingeklemmt ist. Im Übrigen ist die zweite Ausführungsvariante der Vorrichtung 1 identisch zu der in den Fig. 1 und 2 gezeigten ersten Ausführungsvariante der Vorrichtung 1 ausgebildet, sodass für weitere Einzelheiten auf die Beschreibung der ersten Ausführungsvariante der Vorrichtung 1 verwiesen wird.

Die Vorrichtung zeichnet sich insbesondere durch eine hohe Haltbarkeit an dem Träger aus.

### Bezugszeichenliste

- 1: Vorrichtung
- 2: Befestigungsplatte
- 3: Klebefläche
- 4: Metallgitter
- 5: erstes Plattenteil
- 6: zweites Plattenteil
- 7: Aufnahmeraum
- 8: Anlagefläche
- 9: Zuführöffnung
- 10.1, 10.2: erste Befestigungseinrichtung
- 11: zweite Befestigungseinrichtung
- 12: Frontseite
- 13: Längsachse
- 14.1, ..., 14.8: Belüftungsöffnung
- 15: Durchmesser
- 16: Dicke
- 17: Stirnseite
- 18.1, 18.2, 18.3: Ausschnitt
- 19: Kontaktebene

## Patentansprüche

1. Vorrichtung (1) zum Befestigen einer Sanitärkomponente an einem Träger, zumindest aufweisend:
- eine Befestigungsplatte (2) mit einer Klebefläche (3) zur Befestigung der Vorrichtung (1) an dem Träger; und
- ein Metallgitter (4), das zumindest teilweise die Klebefläche (3) bildet.

2. Vorrichtung (1) nach Patentanspruch 1, wobei die Befestigungsplatte (2) zumindest teilweise aus Kunststoff besteht.

3. Vorrichtung (1) nach einem der vorhergehenden Patentansprüche, wobei das Metallgitter (4) zumindest teilweise in die Befestigungsplatte (2) integriert ist.

4. Vorrichtung (1) nach einem der vorhergehenden Patentansprüche, wobei die Befestigungsplatte (2) ein erstes Plattenteil (5) und ein zweites Plattenteil (6) umfasst, zwischen denen das Metallgitter (4) zumindest teilweise angeordnet ist.

5. Vorrichtung (1) nach einem der vorhergehenden Patentansprüche, wobei die Klebefläche (3) zumindest teilweise über das Metallgitter (4) belüftbar ist.

6. Vorrichtung (1) nach einem der vorhergehenden Patentansprüche, wobei die Befestigungsplatte (2) einen Aufnahmeraum (7) für einen Klebstoff aufweist.

7. Vorrichtung (1) nach einem der vorhergehenden Patentansprüche, aufweisend zumindest eine Anlagefläche (8) für den Träger, mit der die Klebefläche (3) von dem Träger beabstandbar ist.

8. Vorrichtung (1) nach einem der vorhergehenden Patentansprüche, wobei das Metallgitter (4) eine Vielzahl von Öffnungen (9) umfasst, die eine Breite von 0,1 mm bis 1 mm aufweisen.

9. Vorrichtung (1) nach einem der vorhergehenden Patentansprüche, wobei die Befestigungsplatte (2) zumindest eine erste Befestigungseinrichtung (10.1, 10.2) zum Befestigen der Befestigungsplatte (2) an dem Träger aufweist.

10. Vorrichtung (1) nach einem der vorhergehenden Patentansprüche, wobei die Befestigungsplatte (2) zumindest eine zweite Befestigungseinrichtung (11) für die Sanitärkomponente aufweist.

11. Verwendung einer Vorrichtung (1) nach einem der vorhergehenden Patentansprüche zum sicheren und einfachen Befestigen einer Sanitärkomponente an einem Träger.
